# EUROPEAN PATENT APPLICATION

(11) **EP 1 548 406 A1**
(43) Date of publication of application: **29.06.2005**
(21) Application number: 04030176.4
(22) Date of filing: 20.12.2004
(51) Int. Cl.: G01C 21/36, G09B 29/10, G06T 11/60

(54) **Navigation apparatus and display method**

(30) Priority: 24.12.2003 JP 2003428383
(71) Applicant: AISIN AW CO., LTD., Anjo-shi Aichi 444-1192 (JP)
(72) Inventor: Yamada, Kunihiro, Okasaki-shi Aichi 444-8564 (JP); Ogawa, Satoshi, Okasaki-shi Aichi 444-8564 (JP)
(74) Representative: Kramer - Barske - Schmidtchen

(57) **Abstract**

A navigation apparatus, including a controller that reads out map data from a memory to display a road map with link names and outputs the map data including a current position on a guidance screen. The controller monitors a drawing area for each link name and monitors a display area for the guidance screen. If a part of a link name becomes out of the display area due to scrolling, the controller moves that link name related to an amount of scrolling in a drawing direction of the link and/or displays the link name using an abbreviated link name

## Description

### INCORPORATION BY REFERENCE

The disclosure of Japanese Patent Application No. 2003-428383 filed on December 24, 2003 including the specification, drawings and abstract are incorporated herein by reference in their entirety.

### BACKGROUND OF THE INVENTION

### 1. Field of Invention

The invention relates to navigation apparatus that display road names in order to guide a user.

### 2. Description of Related Art

In conventional navigation apparatus, roads are displayed on a display unit. Name data corresponding to each displayed road is read out and road names indicated by name data are displayed at coordinate positions determined in the name data. (Refer to, for example, Japanese Unexamined Patent Application Publication No. 99-38868).

### SUMMARY OF THE INVENTION

In the conventional navigation apparatus described above, for example, when scrolling a guidance map in accordance with a moving vehicle, it is not possible to display the road names of roads that are scrolled out of the display screen. This is because road names are displayed at coordinate positions which are determined in the name data, in these conventional navigation apparatus.

Thus, various exemplary embodiments of this invention provides a navigation apparatus capable of easily displaying link names even if a guidance map is scrolled. Various exemplary embodiments provide link names that move related to an amount of scrolling. Various exemplary embodiments indicate link names with abbreviated names once they have been scrolled a predetermined amount.

Various exemplary embodiments of the invention provide a navigation apparatus, including a controller that reads out map data from a memory to display a road map with link names and outputs the map data including a current position on a guidance screen. The controller monitors a drawing area for each link name and monitors a display area for the guidance screen. If a part of a link name moves out of the display area due to scrolling, the controller moves that link name related to an amount of scrolling in a drawing direction of a corresponding link.

Various exemplary embodiments of the invention provide a display method, including reading out map data from a memory to display a road map with link names; outputting the map data including a current position on a guidance screen; monitoring a drawing area for each link name; monitoring a display area for the guidance screen; and moving, if a part of a link name moves out of the display area due to scrolling, that link name related to an amount of scrolling in a drawing direction of a corresponding link.

Various exemplary embodiments of the invention provide a navigation apparatus, including a controller that reads out map data from a memory to display a road map with link names and outputs the map data including a current position on a guidance screen. The controller monitors a drawing area for each link name and monitors a display area for the guidance screen. If a part of a link name moves out of the display area due to scrolling, the controller displays that link name using an abbreviated link name.

Various exemplary embodiments of the invention provide a display method, including reading out map data from a memory to display a road map with link names; outputting the map data including a current position on a guidance screen; monitoring a drawing area for each link name; monitoring a display area for the guidance screen; and displaying, if a part of a link name moves out of the display area due to scrolling, that link name using an abbreviated link name.

Various exemplary embodiments of the invention provide a navigation apparatus, including a controller that reads out map data from a memory to display a road map with link names and outputs the map data including a current position on a guidance screen. The controller monitors a drawing area for each link name and monitors a display area for the guidance screen. If a part of a link name moves within the display area due to scrolling, the controller displays at least a portion of that link name using an abbreviated link name.

Various exemplary embodiments of the invention provide a display method, including reading out map data from a memory to display a road map with link names; outputting the map data including a current position on a guidance screen; monitoring a drawing area for each link name; monitoring a display area for the guidance screen; and displaying, if a part of a link name moves within the display area due to scrolling, at least a portion of that link name using an abbreviated link name.

### BRIEF DESCRIPTION OF THE DRAWINGS

Exemplary embodiments of the invention will now be described with reference to the accompanying drawings, wherein:
Fig. 1 is an exemplary conceptual diagram showing a control section of the navigation apparatus;
Figs. 2A-E are diagrams showing an exemplary method for indicating a street name on the screen during scrolling;
Figs. 3A-C are diagrams showing an exemplary method for indicating a street name on the screen during scrolling;
Fig. 4 is a flow chart showing an exemplary method for indicating a street name during scrolling; and
Fig. 5 is a flow chart showing an exemplary method for indicating a street name during scrolling.

### DETAILED DESCRIPTION OF EXEMPLARY EMBODIMENTS

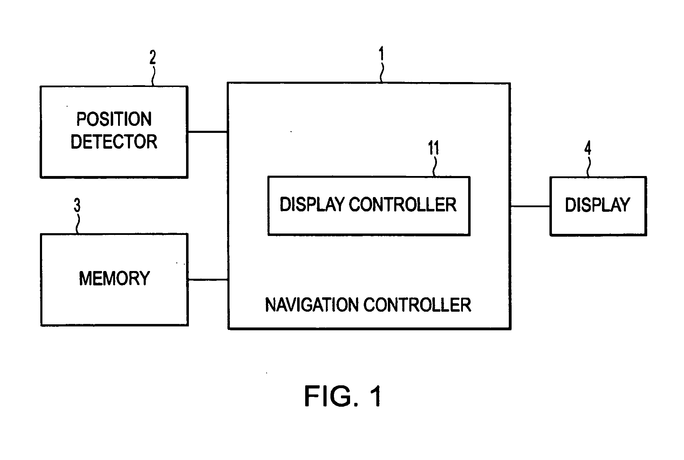

Fig. 1 is an exemplary conceptual diagram showing a control section of a navigation apparatus according to an exemplary embodiment of the invention. As shown in Fig. 1, the navigation apparatus may be conceptually, functionally, or physically divided into, for example, a navigation controller 1, a position detector 2, a memory 3, and/or a display 4. The navigation controller 1 may be, for example, a controller that may, for example, execute navigation processes; receive measuring data from, for example, the position detector 2; read out map data stored in the memory 3; and/or draw a guidance map including, for example, a current position on the display 4. The position detector may be, for example, one or more of a GPS (Global Positioning System) sensor, and/or a cyclometer. The navigation controller 1 may include a display controller 11 that may monitor a drawing area for each link name (e.g., road name and/or intersection name) and/or a display area for the display 4. The display controller 11 may move a link name related to an amount of scrolling in a direction of the link and/or draw the link name with an abbreviated name.

As used herein, the term link refers to, for example, a road or portion of a road. For example, according to one type of road data, each road may consist of a plurality of componential units called links. Each link may be separated and defined by, for example, an intersection, an intersection having more than three roads, a curve, and/or a point at which the road type changes.

In, for example, many countries, abbreviated names are used, for example, as street names instead of full names. In Japan, abbreviated names are used, for example, for express roads and the like. These abbreviated names are useful for a guidance screen of a navigation apparatus since the display area is limited. A non-exclusive list of exemplary abbreviations is shown in Table 1.

**Table 1:**

| Abbreviated Names | |
|---|---|
| Full Name | Abbreviated Name |
| Street | St. |
| Avenue | Ave. |
| Strasse | Str. |
| Tomei Expressway | Tomei |
| Meishin Expressway | Meisin |
| Kan-etsu Expressway | Kan-etsu |

Character data representing abbreviations, such as that shown in Table 1 above, may be stored as a part of road data. In some cases, these abbreviated names may be more familiar than full names. Therefore, it is permissible to provide a manageable display in a limited space with an abbreviated name when at least a part of a corresponding full name cannot be seen in the screen due to scrolling.

As used herein, the term scrolling refers to any movement of link data on the display. For example, map data (containing link data) may be moved automatically, for example, by the movement of the navigation apparatus in order to keep the present location of the navigation apparatus at a certain location relative to the display. Map data may be moved automatically by automatic rescaling of the map. Map data may be moved manually, for example, by a user searching for a particular point with an input device or by a user manually rescaling the map to a preferred resolution.

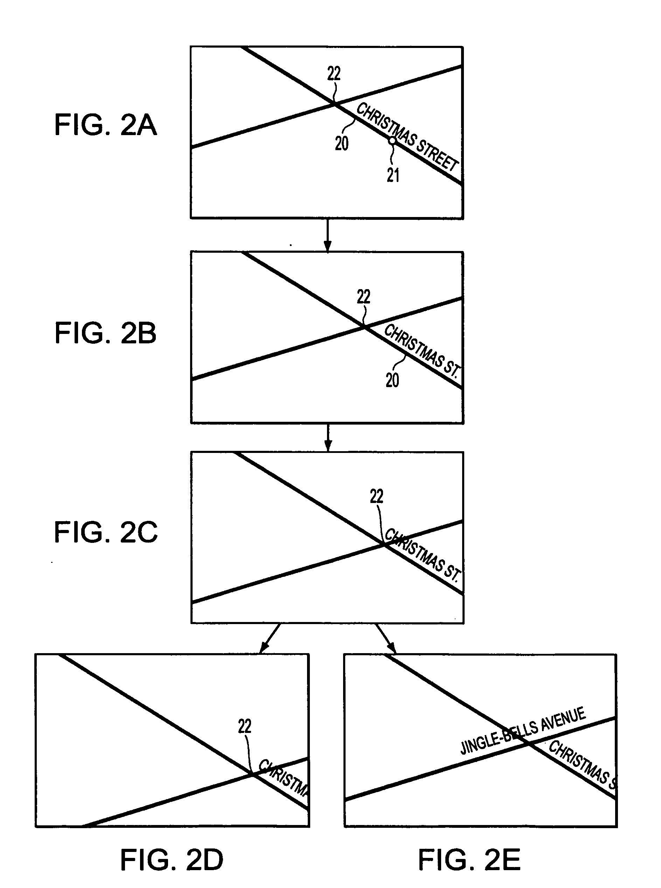

Next, an example of exemplary method for indicating a street name on the screen during scrolling is described with reference to Figs. 2A-E. In Fig. 2A, a link 20 may have a full name "Christmas Street" and a character string indicating the name may have a coordinate position 21 as a drawing position in middle of the character string corresponding to the link. The character string may have a drawing angle that may be, for example, substantially parallel to the link. The character string may be displayed between two end points of the link (that is, a start point and an end point). As shown in Fig. 2B, when it is detected that a part of display dots (e.g., pixels) that make up the "t" of "Christmas Street" becomes out of a display area due to scrolling, the display controller 11 may search character data to read out an abbreviated name of "Street." According to this example, the abbreviated name may be "St.", and thus the display controller 11 may display "St." instead of "Street." Accordingly, it is possible to provide a manageable display with characters at a substantially same position accordingly to the above-described exemplary method.

As shown in Fig. 2C, when it is detected, for example, by the display controller 11, that even a part of the abbreviated name "St." becomes out of the display area due to scrolling, the display controller 11 may move the character string "Christmas St.," for example, related to an amount of dots to be scrolled and/or in a direction of the drawing angle of the link, such that the character string may remain within the display area. Note that, as shown in Fig. 2D, if the abbreviated name "St." becomes out of the display area due to scrolling, once an end point of the display area of the character string "Christmas St." is up to the end point of the link 22, the character string may then be sequentially moved off the screen.

Further, as shown in Fig. 2E, when the end point of the display area of the link name (e.g., "C" of "Christmas St.") may overlap with any other link names (e.g., "Jingle-bells Avenue"), the character string may be prevented from moving to interfere with another character string. Therefore, "Christmas St." may be sequentially moved off the screen so that it does not overlap with "Jingle-bells Avenue."

According to the above-described example, characters may be displayed in the display area as long as possible because abbreviated names may be used when a part of the characters representing a full name may not be seen due to scrolling and/or because the character string may move related to an amount of scrolling in a drawing direction. Further, according to the above-described example, it is possible to provide a manageable display for a user since a character string, abbreviated and/or moved, may be displayed at a same position and in a same drawing direction.

Note that, according to the above example, when a link character string becomes out of the display area, first an abbreviated name may used, then the character string may move related to an amount of scrolling. However, when a link character string becomes out of the display area, it is also possible to first move the character string related to an amount of scrolling. Then if a part of the characters becomes out of the display area, it is possible to use the abbreviated name.

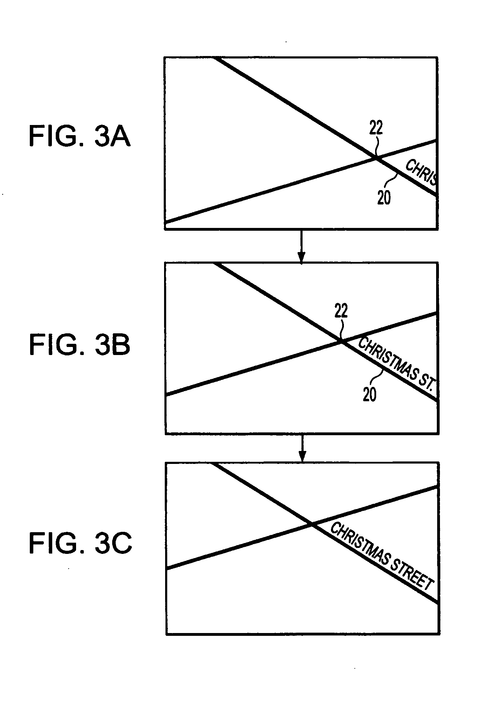

Figs. 3A-C show an exemplary method for indicating a street name on the screen during scrolling. Fig. 3A shows a situation where a part of the link name 20, which was previously out of the display area, comes into the display area of the screen due to scrolling. Fig. 3B shows a situation where the screen of Fig. 3A is additionally scrolled. As shown in Fig. 3B, following a certain amount of scrolling, all necessary characters may displayed by using an abbreviated name. Furthermore, as shown in Fig. 3C, when the screen is additionally scrolled, and all necessary characters of a full name may be displayed, the displayed name may be changed from the abbreviated name to the full name.

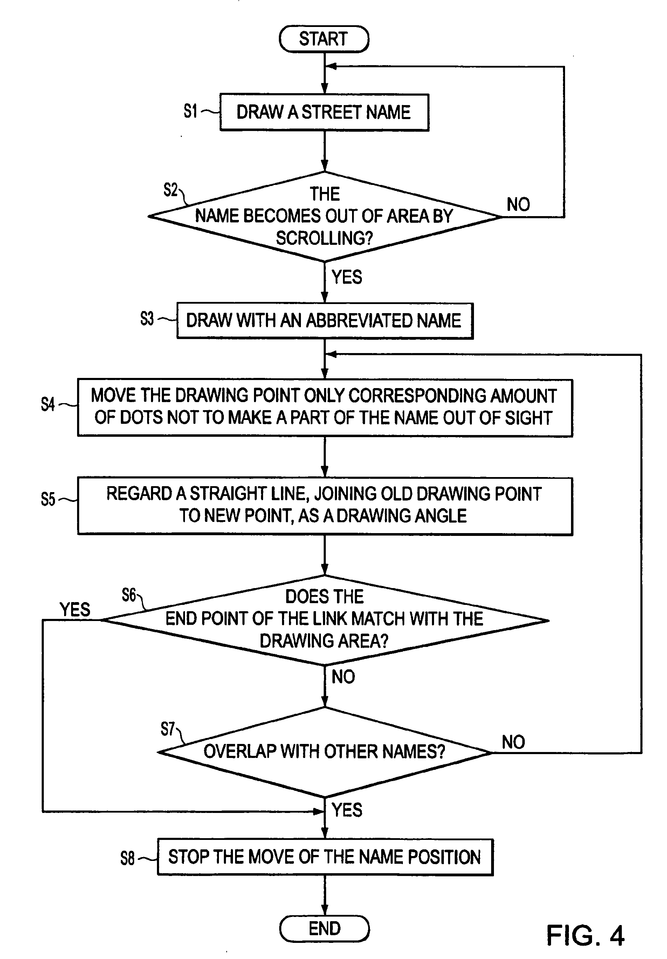

Fig. 4 shows an exemplary method for indicating a street name during scrolling. As shown in Fig. 4, first a determination may be made whether a drawn street name is out of a display area of a display due to scrolling (Step S1 and S2). If the name is out of the display area (Step S2 = YES), the name may be drawn with an abbreviated name (Step S3). When the screen is additionally scrolled, the drawing position of the name may be moved, in a drawing direction of the link, by an amount of dots such that a part of the name does not become out of sight (Step S4). At this point, a straight line joining the old drawing point to a new drawing point (e.g., a line substantially parallel to the link) may be determined and regarded as a drawing angle (Step S5). Next, a determination may be made whether an end point of the link substantially corresponds to an end point of the drawing area (Step S6). A determination may also be made whether the link name overlaps with any other link names (Step S7). When the end point of the link matches with the end point of the drawing area (Step S6=YES) or when the link name overlaps with any other link names (Step S7=YES), the drawing point of the link name may no longer be moved. Thus, if the screen is additionally scrolled, the name may be moved off the display area.

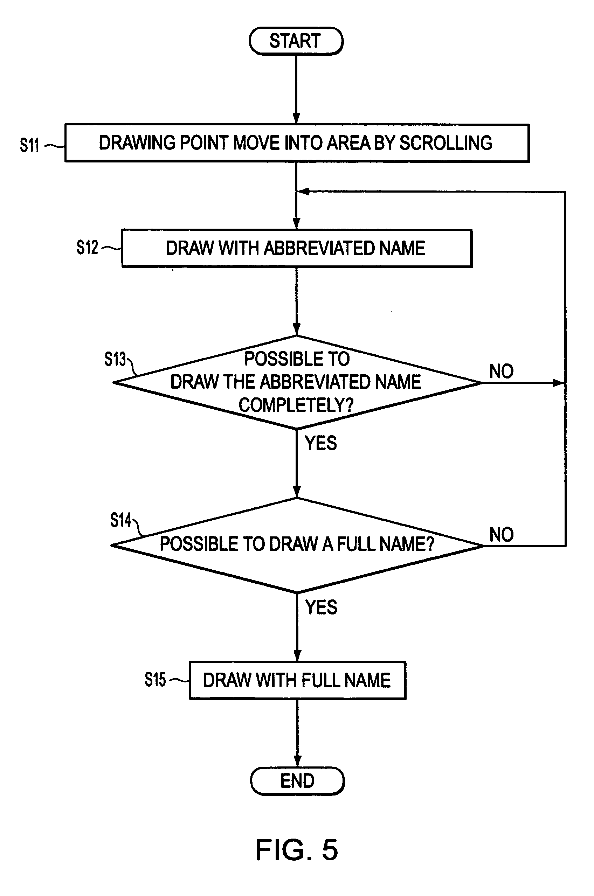

Fig. 5 shows an exemplary method for indicating a street name during scrolling. As shown in Fig. 5, when a street name is to be drawn, a drawing point of the name moves into the display area by scrolling (Step S11), and drawing an abbreviated name may initiated (Step S12). According to this step, as much of the abbreviated name that will fit on the screen may be drawn. Next, a determination may be made whether it is possible to draw all of the characters necessary for the abbreviated name (Step S 13). If it is not possible to draw all of the characters necessary for the abbreviated name (Step S13=NO), the name may be re-drawn with as many characters as possible (Step S12). If it is possible to draw all of the characters necessary for the abbreviated name (Step S13=YES) a determination may be made whether it is possible to draw the full name (Step S 14). If it is possible to draw the full name, the full name may be drawn (Step S16).

According to the above-described examples, it is possible to provide a manageable display for a user since a link name may be displayed at a same position and/or orientation on a display, even when the display is scrolling in accordance with a moving vehicle. Furthermore, when a link name, for example, reaches an edge of a display, an intersection, and or another link name, it may be abbreviated as necessary to maintain that position. Thus, the present invention is very useful throughout business and industry.

While various features of this invention have been described in accordance with the examples outlined above, various alternatives, modifications, variations and/or improvements of those features may be possible. Accordingly, the exemplary embodiments of the invention, as set forth above, are intended to be illustrative. Various changes may be made without departing from the spirit and scope of the invention.
It is explicitly stated that all features disclosed in the description and/or the claims. are intended to be disclosed separately and independently from each other for the purpose of original disclosure as well as for the purpose of restricting the claimed invention independent of the compositions of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A navigation apparatus, comprising
a controller (1) that is adapted to
read out map data from a memory (3) to display a road map with link names,
output the map data including a current position on a guidance screen,
monitor a drawing area for each link name,
monitor a display area of the guidance screen, and
display a link name,
- if a part of the link name moves out of the display area due to scrolling, by moving the link name related to an amount of scrolling in a drawing direction of a corresponding link and/or using an abbreviated link name, and/or
- if a part of the link name moves into the display area due to scrolling, by displaying, at least a portion of the link name using an abbreviated link name.

2. The navigation apparatus of claim 1, wherein if a part of a full link name moves out of the display area due to scrolling, the controller is adapted to display the link name using an abbreviated link name.

3. The navigation apparatus of claim 1 or 2, wherein the controller is adapted to place a movement limit for the moved link name at a position where an end point of the moved link name substantially corresponds with an end point of the corresponding link.

4. The navigation apparatus of one of claims 1 to 3, wherein the controller is adapted to place a movement limit for the moved link name at a position where an end point of the moved link name overlaps with any other link names.

5. The navigation apparatus according to one of claims 1 to 4, wherein the controller is adapted to display the link name using a full link name if the full link name can be drawn completely.

6. A display method, comprising:
reading out map data from a memory to display a road map with link names;
outputting the map data including a current position on a guidance screen;
monitoring a drawing area for each link name;
monitoring a display area of the guidance screen; and
displaying a link name,
- if a part of the link name moves out of the display area due to scrolling, by moving link name related to an amount of scrolling in a drawing direction of a corresponding link and/or using an abbreviated link name, and/or
- if a part of the link name moves into the display area due to scrolling,
by displaying at least a portion of the link name using an abbreviated link name.

7. The display method of claim 6, further comprising:
displaying, if a part of a full link name moves out of the display area due to scrolling, the link name using an abbreviated link name.

8. The display method of claim 6 or 7, wherein moving the link name related to an amount of scrolling comprises placing a movement limit for the moved link name at a position where an end point of the moved link name substantially corresponds with an end point of the corresponding link.

9. The display method of one of claims 6 to 8, wherein moving the link name related to an amount of scrolling comprises placing a movement limit for the moved link name at a position where an end point of the moved link name overlaps with other link names.

10. The display method of one of claims 6 to 9, wherein displaying at least a portion of the link name using an abbreviated link name comprises displaying, if a full link name can be drawn completely, the link name using the full link name.

11. A program including a set of program instructions which, when executed on a data processing device, perform the method of one of claims 6 to 10.

12. A storage medium storing a program instructions according to claim 11.
